# EUROPÄISCHE PATENTANMELDUNG

(11) **EP 1 722 451 A1**
(43) Veröffentlichungstag der Anmeldung: **15.11.2006**
(21) Anmeldenummer: 05010157.5
(22) Anmeldetag: 10.05.2005
(51) Int. Cl.: H01S 3/225, H01S 3/03, G03F 7/20, B23K 26/12

(54) **Lasersystem mit integrierter Stickstoffversorgung**

(71) Anmelder: WaveLight Laser Technologie AG, 91058 Erlangen (DE)
(72) Erfinder: Donitzky, Christof, 90542 Eckental (DE); Vogler, Klaus, Dr., 90542 Eckental (DE)
(74) Vertreter: von Hellfeld, Axel

(57) **Zusammenfassung**

Lasersystem mit einer Laserquelle zur Erzeugung von Laserstrahlung, einem Raum zur Ausbreitung von Laserstrahlung und einer Stickstoffquelle zur Versorgung des Raums mit Stickstoff.

## Beschreibung

### Gebiet der Erfindung

Die folgende Erfindung betrifft Lasersysteme und insbesondere Stickstoffversorgungen von Lasersystemen.

### Hintergrund der Erfindung

Bei Lasersystemen werden, um beispielsweise zu hohe Ozonkonzentrationen zu vermeiden, Räume, in denen sich beim Betrieb Laserstrahlung ausbreitet, mit Stickstoff versorgt. Diese Stickstoffzufuhr kann auch als Spülen derartiger Räume mit Stickstoff bezeichnet werden.

Beispielsweise werden bei zur Anwendung in der Lithographie vorgesehenen Lasersystemen, beispielsweise einem ArF-Laser, Strahlführungen in Form von Strahlkanälen mit Stickstoff gespült. Eine derartige Stickstoffversorgung kann auch bei im Bereich der Chirurgie, insbesondere der refraktiven Chirurgie, vorgesehenen Lasersysteme, die als Laserquelle beispielsweise ArF-Excimerlaser umfassen, durchgeführt werden.

Zur Versorgung von Lasersystemen mit Stickstoff werden üblicherweise mit unter Druck stehendem Stickstoff gefüllte Flaschen, die jeweils einem Lasersystem zugeordnet sind, oder zentrale Stickstoffversorgungen zur Zufuhr von unter Druck stehendem Stickstoff verwendet.

Eine zentrale Stickstoffversorgung ist für viele Anwendungen, beispielsweise bei kleinen, nur eine Laserquelle umfassenden Lasersystemen und sogenannten Stand-Alone-Lasersystemen, beispielsweise im Bereich der refraktiven Chirurgie, nicht geeignet. Des Weiteren kann ein Ausfall einer zentralen Stickstoffversorgung für ein großes, komplexes Lasersystem oder mehrere Lasersysteme dazu führen, dass der Betrieb der Lasersysteme beeinträchtigt wird.

Die bei Lasersystemen üblicherweise verwendeten Flaschen sind aufgrund ihres Stickstofffassungsvermögens (z.B. 20 I, 50 I) zum Teil häufig auszutauschen. Hierfür ist im Allgemeinen fachmännisch geschultes Servicepersonal erforderlich.

Des Weiteren sind Stickstofftlaschen aufgrund ihres Gewichts schwer zu handhaben. Da Stickstoffflachen komprimierten Stickstoff mit einem Druck von bis zu 150 bar enthalten, stellen sie auch ein Gefährdungspotential dar, insbesondere bei medizinischen Anwendungen. Teure Druckreduzierventile sind erforderlich, die insbesondere bei häufigem Flaschenwechsel störanfällig sind. Bei sogenannten Stand-Alone-Lasersystemen ist es ferner üblich, Stickstofflaschen in einem Gehäuse des Lasersystems unterzubringen. Aufgrund der Flaschen- bzw. Kartuschengröße führt dies oftmals zu großen Abmessungen des Gehäuses bzw. des Lasersystems insgesamt.

### Aufgabe der Erfindung

Aufgabe der Erfindung ist es, Mittel zur Stickstoffversorgung von Lasersystemen bereitzustellen, die die oben genannten Probleme vermeiden.

### Kurzbeschreibung der Erfindung

Zur Lösung der obigen Aufgabe stellt die vorliegende Erfindung ein Lasersystem gemäß Anspruch 1 bereit.

Das erfindungsgemäße Lasersystem umfasst eine Laserquelle zur Erzeugung von Laserstrahl, einen Raum, in dem sich Laserstrahlung der Laserquelle ausbreiten kann, und eine Stickstoffquelle, um den Raum mit Stickstoff zu versorgen.

Die Stickstoffquelle ist ein baueinheitlich integrierter Stickstoffgenerator, der zur Gewinnung von Stickstoff aus Umgebungsluft ausgelegt ist.

Unter baueinheitlich integriert ist hierbei insbesondere zu verstehen, dass das Lasersystem den Stickstoffgenerator wenigstens in funktionaler Hinsicht, vorzugsweise auch konstruktiv umfasst. So kann der Stickstoffgenerator beispielsweise in einem Gehäuse des Lasersystems angeordnet oder an diesem angebracht, beispielsweise an dessen Gehäuse befestigt, sein.

Vorzugsweise ist der Stickstoffgenerator in der Lage, Stickstoff mit einem Reinheitsgrad von wenigstens 98% und mehr aus Umgebungsluft zu gewinnen.

Des Weiteren ist es bevorzugt, dass der Stickstoffgenerator in dem Raum einen Stickstoffvolumenstrom im Bereich von 100 cm³/min bis 10.000 cm³/min zu erzeugen vermag.

Der Stickstoffgenerator kann ausgelegt sein, um Stickstoff mit einem Druck zwischen Umgebungsdruck und 10 bar zur Abgabe in den Raum zu erzeugen.

Wenn der Stickstoffgenerator Umgebungsluft mit einem Druck benötigt, der höher als Umgebungsdruck ist, kann der Stickstoffgenerator über einen Versorgungsanschluss von einer Quelle für unter Druck gesetzte Umgebungsluft diese mit erhöhtem Druck erhalten.

Alternativ oder ergänzend ist es vorgesehen, dass das Lasersystem eine baueinheitlich integrierte Vorrichtung umfaßt, um Umgebungsluft mit erhöhtem Druck bereitzustellen. Eine solche Vorrichtung kann beispielsweise einen Kompressor umfassen.

Vorzugsweise umfasst die Laserquelle wenigstens einen Festkörperlaser, einen ArF-Laser und/oder einen UV-Laser, einen Excimerlaser, einen F₂-Laser und/oder einen KrF-Laser. Der Raum, der zur Ausbreitung von Laserstrahlung vorgesehen ist, kann einen Strahlkanal für Laserstrahlung und/oder ein Volumen zur Durchführung von Arbeitsvorgängen unter Verwendung von Laserstrahlung umfassen.

### Kurzbeschreibung der Zeichnungen

Bevorzugte Ausführungsformen der vorliegenden Erfindung werden in der folgenden Beschreibung unter Bezugnahme auf die beigefügten Zeichnungen erläutert, von denen zeigen:
Fig. 1 eine schematische Darstellung eines Stickstoffgenerators eines erfindungsgemäßen Lasersystems,
Fig. 2 eine schematische Darstellung einer bevorzugten Ausführungsform eines erfindungsgemäßen Lasersystems, und
Fig. 3 eine weitere bevorzugte Ausführungsform eines erfindungsgemäßen Lasersystems.

### Beschreibung bevorzugter Ausführungsformen

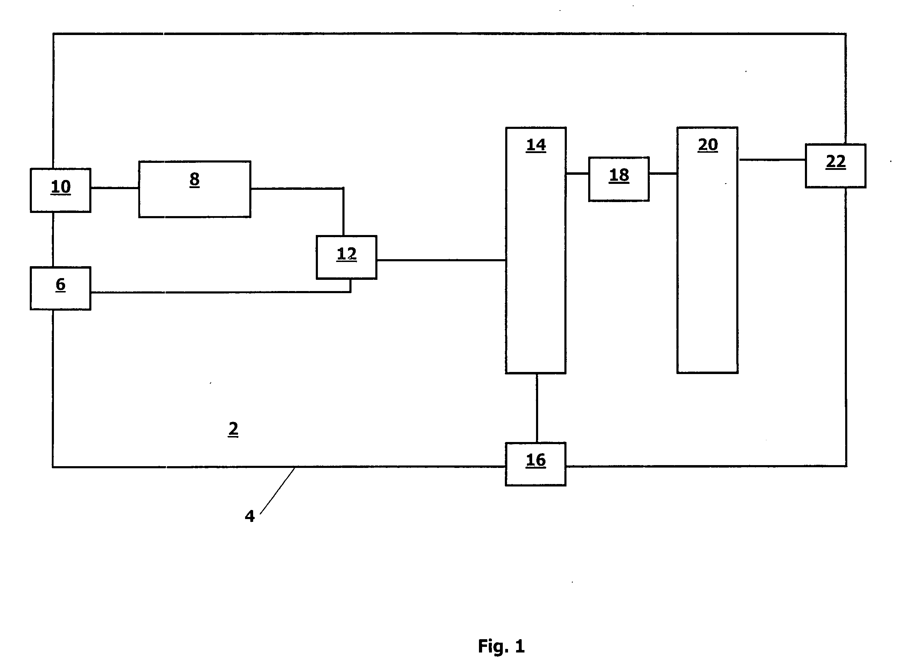

Fig. 1 zeigt eine schematische Darstellung eines Stickstoffgenerators 2. Der Stickstoffgenerator 2 weist ein Gehäuse 4 auf, in dem Komponenten des Stickstoffgenerators 2 angeordnet sind und das in einer oder mehreren seiner Seitenwände (nicht bezeichnet) Einlass- und Auslassanschlüsse aufweist.

Der Stickstoffgenerator 2 dient zur Erzeugung von Stickstoff aus Umgebungsluft. Der Stickstoffgenerator 2 kann unter Druck gesetzte Umgebungsluft (Druckluft) von einer nicht gezeigten Druckluftquelle über einen Drucklufteinlassanschluss 6 erhalten. Alternativ kann Druckluft unter Verwendung eines vorteilhafterweise im Gehäuse 4 angeordneten Kompressors 8 bereitgestellt werden, der über einen Umgebungslufteinlass 10 Umgebungsluft bei Umgebungsdruck ansaugt. Der Kompressor 8 kann auch als separate Komponente ausgeführt sein.

Unabhängig davon, ob unter Druck gesetzte Umgebungsluft von einer externen Druckluftquelle und/oder von dem Kompressor 8 zugeführt wird, wird die erhaltene unter Druck gesetzte Umgebungsluft durch eine Einlassventil- und/oder -filteranordnung 12 geführt. Die Einlassventil- und/oder -filteranordnung 12 kann ein oder mehrere Ventile, beispielsweise Zwei-Weg-Ventile, aufweisen, um die Zufuhr von unter Druck gesetzter Umgebungsluft zuzulassen oder zu verhindern. Ferner ist es vorgesehen, dass die Einlassventil- und/oder - filteranordnung 12 einen oder mehrere Filter oder vergleichbare Komponenten aufweist, um Verunreinigungen der Umgebungsluft, wie zum Beispiel Staub, kleine Partikel, Schwebteilchen etc., zu entfernen.

Nach Durchgang durch die Einlassventil- und/oder -filteranordnung 12 wird die unter Druck gesetzte Umgebungsluft einer Stickstoffgewinnungseinrichtung 14 zugeführt. Die Stickstoffgewinnungseinrichtung 14 gewinnt aus der zugeführten Umgebungsluft Stickstoff, beispielsweise unter Verwendung von Molekularsieben. Bei der Trennung von Stickstoff aus Umgebungsluft anfallende Bestandteile der Umgebungsluft, die kein Stickstoff sind, können über eine Ablassventilanordnung 16 abgelassen werden.

Gewonnener Stickstoff wird von der Stickstoffgewinnungseinrichtung 14 über eine Ventilanordnung 18, beispielsweise in Form eines Rückschlagventils, weitergeleitet, die ein Zurückströmen von Stickstoff und/oder, falls überhaupt möglich, anderen Fluiden verhindert. Danach kann gewonnener Stickstoff einem Stickstoffbehälter 20 zur Bevorratung und/oder Zwischenspeicherung von Stickstoff oder unmittelbar einem Auslass 22 zugeführt werden. Der Stickstoffbehälter 20 ermöglicht es, wenn keine im Folgenden beschriebene Versorgung eines Lasersystems mit Stickstoff erforderlich ist, gewonnenen Stickstoff zu speichern. Bei einer im Folgenden beschriebenen Versorgung eines Lasersystems mit Stickstoff kann der Stickstoffbehälter 20 in Abhängigkeit davon, wie die Stickstoffversorgung aktuell durchgeführt wird, zur Zwischenspeicherung von Stickstoff, wenn mehr Stickstoff als zur Stickstoffversorgung benötigt gewonnen wird, und/ oder als ergänzende, unterstützende Stickstoffquelle dienen, wenn die von der Stickstoffgewinnungseinrichtung 14 gewonnene Menge an Stickstoff nicht zur aktuellen Stickstoffversorgung ausreicht. Bei einer nicht dargestellten Ausführungsform ist der Stickstoffbehälter 20 nicht vorgesehen, wobei von der Stickstoffgewinnungseinrichtung 14 gewonnener Stickstoff bei Bedarf unmittelbar dem Auslass 22 zugeführt wird. Eine Anpassung der über den Auslass bereitgestellten Menge an Stickstoff kann beispielsweise durch eine Steuerung der Stickstoffgewinnungseinrichtung 14 derart erreicht werden, dass die Stickstoffgewinnungseinrichtung 14 bedarfsabhängig Stickstoff gewinnt.

Es ist vorgesehen, dass der Stickstoffgenerator 2 Stickstoff mit einem Reinheitsgrad von mehr als 98% aus der Umgebungsluft gewinnt. Dadurch wird erreicht, dass z.B. in der Umgebungsluft enthaltener Sauerstoff im Wesentlichen vollständig vom Stickstoff getrennt wird. Dies ist insbesondere bei einer Versorgung von Lasersystemen wünschenswert, bei denen die Stickstoffversorgung zu hohe Ozonkonzentrationen vermeiden soll.

Ferner ist es vorgesehen, dass der Stickstoffgenerator 2 einen Volumenstrom an Stickstoff zu erzeugen vermag, der ausreicht, um Räume, in denen sich Laserstrahlung ausbreiten kann und die mit Stickstoff des Generators 2 versorgt werden sollen, im Wesentlichen vollständig zu füllen. Insbesondere bei derartigen Räumen, die eine längliche Form haben, beispielsweise im Fall von Kanälen, in denen Laserstrahlung verläuft, ist es vorteilhaft, wenn der Stickstoffgenerator 2 an seinem Ausgang 22 Stickstoff mit einem Druck bereitstellt, der bezüglich des mit Stickstoff zu versorgenden Raums eine Druckdifferenz zur äußeren Atmosphäre_zur Folge hat, die eine im Wesentlichen vollständigen Stickstoffversorgung bzw. Spülung des jeweiligen Raums bewirkt. Beispielsweise sind Volumenströme von 100 cm³/min bis zu 10.000 cm³/min und mehr vorgesehen. Wünschenswerte Drücke des ausgangsseitig abgegebenen Stickstoffs des Stickstoffgenerators 2 liegen in einem Bereich zwischen 5 und 7 bar, die über Druckreduzierventile auf geeignete Drücke größer als der Atmosphärendruck reduziert werden.

Um insbesondere bei sogenannten Stand-Alone-Lasersystemen eine baueinheitliche Integration des Stickstoffgenerators 2 auf einfache Weise ohne Vergrößerung der Gesamtabmessungen des Lasersystems zu erreichen, ist es vorteilhaft, wenn der Stickstoffgenerator 2 Abmessungen mit einer Höhe, einer Breite und einer Tiefe aufweist, die jeweils 0,50 m nicht überschreiten.

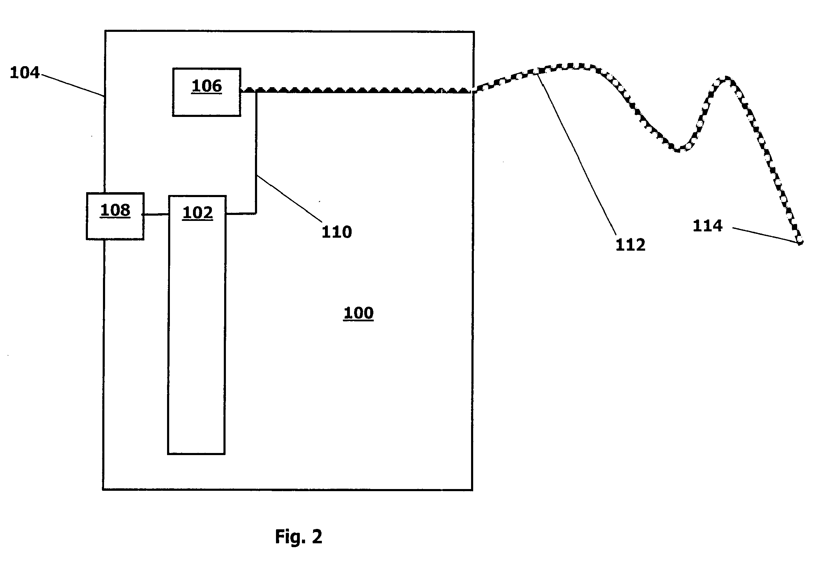

Fig. 2 veranschaulicht schematisch eine Ausführungsform eines Lasersystems 100 mit einem baueinheitlich integrierten Stickstoffgenerator 102, der beispielsweise dem Stickstoffgenerator 2 von Fig. 1 entsprechen kann. Unter baueinheitlich integriert ist hier insbesondere zu verstehen, dass der Stickstoffgenerator 102 einen von dem Lasersystem 100 wenigstens funktional oder auch konstruktiv umfassten Bestandteil darstellt. Dies kann beispielsweise dadurch erreicht werden, dass der Stickstoffgenerator 102 in einem Gehäuse 104 des Lasersystems 100 untergebracht ist. Eine alternative Möglichkeit besteht darin, den Stickstoffgenerator 102 als mit dem Gehäuse 104 verbundene, zugeordnete Komponente bereitzustellen (z.B. am Gehäuse 104 außen angebracht).

Das Lasersystem 100 weist eine Laserquelle 106 auf, mit der Laserstrahlung erzeugt werden kann. Die Laserquelle 106 kann beispielsweise einen oder mehrere Festskörperlaser, ArF-Laser, UV-Laser und dergleichen umfassen, die beispielsweise Laserstrahlung mit Wellenlängen von 193 nm, 210 nm und 213 nm erzeugt bzw. erzeugen.

Gemäß Fig. 2 weist das Gehäuse 104 einen Einlass oder Einlassanschluss 108 auf, über den dem Stickstoffgenerator 102 Umgebungsluft zugeführt werden kann. Wenn der Stickstoffgenerator 102 keine Einrichtung zur Erzeugung von unter Druck gesetzter Umgebungsluft umfasst, ist die Komponente 108 des Lasersystems 100 als Einlassanschluss ausgebildet, der mit einer nicht dargestellten Quelle für unter Druck gesetzte Umgebungsluft verbunden werden kann. Andernfalls ist die Komponente 108 des Lasersystems 100 als Einlass ausgeführt, über den Umgebungsluft bei Umgebungsdruck angesaugt werden kann. Alternativ sind beide Varianten möglich.

Von dem Stickstoffgenerator 102 gewonnener Stickstoff wird über einen Stickstoffleitung 110 zur im Folgenden beschriebenen Stickstoffversorgung weitergeleitet.

Von der Laserquelle 106 erzeugte Laserstrahlung wird in einen gemäß Fig. 2 kanalähnlich ausgebildeten Raum 112 abgegeben, in dem sich Laserstrahlung von der Laserquelle 106 bis zu einem Laserabgabeende 114 ausbreiten kann. Die Stickstoffleitung 110 ist mit dem Laserstrahlkanal 112 so verbunden, dass der Kanal 112 im Wesentlichen vollständig mit Stickstoff versorgt werden kann. Dies kann beispielsweise dadurch erreicht werden, wenn, wie in Fig. 2 gezeigt, die Stickstoffleitung 110 nahe der Stelle mit dem Kanal 112 verbunden ist, an der Laserstrahlung von der Laserquelle 106 in den Kanal 112 abgegeben wird.

Diese Ausführungsform kann beispielsweise verwendet werden, um Stand-Alone-Lasersysteme zur Lithographie und für chirurgische Anwendungen, insbesondere refraktive chirurgische Anwendungen, bereitzustellen.

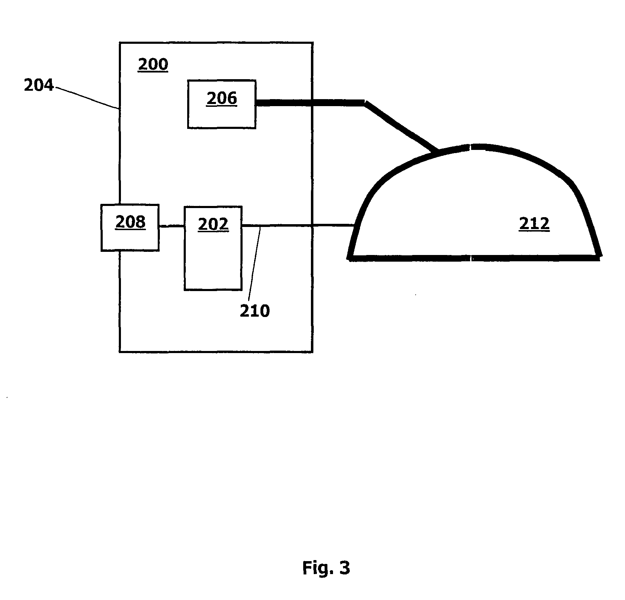

Fig. 3 zeigt eine weitere Ausführungsform eines Lasersystems 200 mit einem Stickstoffgenerator 202, der beispielsweise in einem Gehäuse 204 untergebracht ist, und einer Laserquelle 206. Der Stickstoffgenerator 202 erhält über einen Einlass oder Einlassanschluss 208 Umgebungsluft und/oder unter Druck gesetzte Umgebungsluft. Von dem Stickstoffgenerator 202 erzeugter Stickstoff wird über eine Stickstoffleitung 210 einem Raum 212 zugeführt, in dem sich Laserstrahlung der Laserquelle 206 ausbreiten kann. Bei dieser Ausführungsform umfasst der Raum 212 ein Volumengebiet, in dem Arbeitsvorgänge unter Verwendung von Laserstrahlung der Laserquelle 206 durchgeführt werden können. Auch hier ist es vorgesehen, dass die Stickstoftleitung 210 so mit dem Raum 212 verbunden ist, dass der Raum 212 im Wesentlichen vollständig mit Stickstoff versorgt werden kann. Diese Ausführungsform kann beispielsweise verwendet werden, um Lasersysteme bereitzustellen, bei denen der Raum 212 eine Bearbeitungszone für Mikromaterialbearbeitung mit UV-Laserstrahlung unter Stickstoff-Schutzgasatmosphäre umfasst.

## Patentansprüche

1. Lasersystem (100, 200), mit:
- einer Laserquelle (106, 206) zur Erzeugung von Laserstrahlung,
- einem Raum (112, 212) zur Ausbreitung von Laserstrahlung der Laserquelle (106, 206), und
- einer Stickstoffquelle (2, 102, 202) zur Versorgung des Raums (112, 212) mit Stickstoff,
**dadurch gekennzeichnet, dass**
- die Stickstoffquelle (102, 202) ein Stickstoffgenerator (2) zur Gewinnung von Stickstoff aus Umgebungsluft ist.

2. Lasersystem nach Anspruch 1, bei dem
der Stickstoffgenerator (2) ausgelegt ist, Stickstoff mit einem Reinheitsgrad von wenigstens 98% aus Umgebungsluft zu gewinnen.

3. Lasersystem nach Anspruch 1 oder 2, bei dem
der Stickstoffgenerator (2) ausgelegt ist, in dem Raum (112, 212) einen Stickstoffvolumenstrom im Bereich von 100 cm³/min bis 10.000 cm³/min zu erzeugen.

4. Lasersystem nach einem der vorherigen Ansprüche, bei dem
der Stickstoffgenerator (2) ausgelegt ist, Stickstoff mit einem Druck zwischen Umgebungsdruck und 10 bar in den Raum (112, 212) abzugeben.

5. Lasersystem nach einem der vorherigen Ansprüche, mit
einem Versorgungsanschluss (6, 108, 208) zur Verbindung mit einer Quelle für unter Druck gesetzte Umgebungsluft zur Versorgung des Stickstoffgenerators (2) mit unter Druck gesetzter Umgebungsluft.

6. Lasersystem nach einem der Ansprüche 1 bis 4, mit
einer Vorrichtung zum unter Druck setzen von Umgebungsluft mit einem Umgebungslufteinlass (10) für Umgebungsluft bei Umgebungsdruck, einer Einrichtung (8) zum unter Druck setzen eingelassener Umgebungsluft und einem mit einem Einlass des Stickstoffgenerators verbundenen Auslass zur Versorgung des Stickstoffgenerators (2) mit unter Druck gesetzter Umgebungsluft.

7. Lasersystem nach einem der vorherigen Ansprüche, bei dem
die Laserquelle einen Festkörperlaser, einen ArF-Laser, einen UV-Laser, einen Excimerlaser, einen F₂-Laser oder einen KrF-Laser umfasst.

8. Lasersystem nach einem der vorherigen Ansprüche, bei dem
der Raum (112, 212) zur Ausbreitung von Laserstrahlung einen Strahlkanal (112) für Laserstrahlung umfasst.

9. Lasersystem nach einem der vorherigen Ansprüche, bei dem
der Raum (112, 212) zur Ausbreitung von Laserstrahlung ein Volumen (212) zur Durchführung von Arbeitsvorgängen unter Verwendung von Laserstrahlung umfasst.
